# EUROPÄISCHE PATENTANMELDUNG

(11) **EP 3 627 130 A1**
(43) Veröffentlichungstag der Anmeldung: **25.03.2020**
(21) Anmeldenummer: 19198039.0
(22) Anmeldetag: 18.09.2019
(51) Int. Cl.: G01M 5/00

(54) **VERFAHREN ZUR BEREITSTELLUNG EINER DETEKTIONSANORDNUNG UND DETEKTIONSANORDNUNG**

(30) Priorität: 18.09.2018 DE 102018215852
(71) Anmelder: Hochschule Wismar, 23966 Wismar (DE)
(72) Erfinder: BOLLE, Guido, 17217 Kuckssee (DE)
(74) Vertreter: Müller Verweyen

(57) **Zusammenfassung**

Verfahren zur Bereitstellung einer Detektionsanordnung (20) zur Detektion eines Risses (5) in einem Betonbauteil (1), umfassend folgende Schritte: Verbinden eines Messelementes (3) und des Betonbauteils (1), Bereitstellen wenigstens zweier Messkontakte (10, 11), wobei die Messkontakte (10, 11) mit dem Messelement (3) elektrisch leitend verbunden werden. Das Messelement (3) wird in einer vor dem Anbringen des Messelementes (3) in das Betonbauteil (1) eingebrachten Nut (2) in einer verbundfesten Verbindung mit dem Betonbauteil (1) angeordnet.

## Beschreibung

Die vorliegende Erfindung betrifft ein Verfahren zur Bereitstellung einer Detektionsanordnung zur Detektion eines Risses in einem Betonbauteil mit den Merkmalen des Oberbegriffs von Anspruch 1 und eine Detektionsanordnung zur Detektion eines Risses in einem Betonbauteil und ein Betonbauteil mit den Merkmalen des Oberbegriffs von Anspruch 9.

Detektionsanordnungen zur Detektion eines Risses in einem Betonbauteil sind im Stand der Technik bekannt. Beispielsweise ist gattungsgemäß die Messung mit Risssensoren auf der Basis von Dehnmessstreifen bekannt. Dabei dienen elektrische Dehnmessstreifen der Dehnungsmessung. Bei einer Dehnung ändert ein Draht des Dehnmessstreifens seinen elektrischen Widerstand und der Dehnungsmessung liegt die Widerstandsänderung des Drahtes bei der Dehnung zu Grunde. Die Dehnmessstreifen werden starr auf die Oberfläche des Bauteils geklebt und somit reißt der Dehnmessstreifen im selben Moment, wie die im Einflussbereich des Dehnmessstreifens befindliche Oberfläche. Der gemessene Widerstand nimmt dann sehr stark zu und lässt einen Schluss auf einen lokalen Riss nahe dem Dehnmessstreifen zu. Die Größe der als Risssensoren verwendeten Dehnmessstreifen ist auf wenige Quadratzentimeter beschränkt. Außerhalb der Risssensoren stattfindende Rissbildung wird nicht registriert. Daher werden Dehnmessstreifen nur dann angewendet, wenn die Lage eines entstehenden Risses genau bekannt ist oder das zeitliche Wachstum eines Risses kontrolliert werden soll. Mit diesem Verfahren kann nur ein kleiner Bereich des Bauteils überwacht werden und setzt eine entsprechend vorbehandelte bzw. glatte Oberfläche voraus, um den Dehnmessstreifen aufbringen zu können. Die Anwendung erfolgt daher üblicherweise auf glatten metallischen oder keramischen Bauelementen.

Ein weiteres Verfahren basiert auf der Detektion eines Risses auf Grundlage von Dehnungsmessungen mit Wegtastern. In diesem Fall wird auf die Betonoberfläche ein als Dehnungssensor verwendeter Wegtaster aufgebracht. Mit der Entstehung eines Risses innerhalb eines durch den Wegtaster definierten Messbereichs ist in der Regel eine irreversible Dehnung verbunden, die als Signal für eine Rissbildung gewertet werden kann. Die Wegtaster verlangen in der Regel eine hohe Messgenauigkeit und sind kostenintensiv. Des Weiteren wird für jeden Messkanal ein Verstärker mit entsprechender Auflösung benötigt. Eventuell temperaturbedingte Dehnungsänderungen können als Rissbildung fehlgedeutet werden und eine Rissbildung, die mit einer großen elastischen reversiblen Dehnungsänderung verbunden ist, kann im Gesamtsignal untergehen und unerkannt bleiben.

Ferner können Risse mittels Inaugenscheinnahme detektiert werden. Dazu muss das Betonbauteil besichtigt werden und eventuelle Änderungen können nur zum Zeitpunkt der Besichtigung registriert werden. Durch die Besichtigung ist dieses Verfahren personell und zeitlich aufwendig, nicht kontinuierlich, nicht automatisch und nicht objektiv. Es kann keine Aussage getroffen werden, wann und unter welchen Umständen ein Riss entstanden ist.

Alternativ kann eine Nahbereichsphotogrammetrie durchgeführt werden, bei der eine Kamera permanent Fotos von der Betonoberfläche aufnimmt. Das Verfahren setzt jedoch eine spezielle Software voraus, die Bereiche mit starker Flächendehnung bzw. Rissbildungsbereiche untersucht. Ferner muss die Kamera geschützt werden und das Verfahren ist in offen zugänglichen Bereichen nicht anwendbar.

Ein weiteres optisches Verfahren basiert auf der Verwendung von faseroptischen Sensoren. Faseroptische Sensoren werden starr auf die Betonoberfläche geklebt oder mit dieser verbunden. In jedem Fall ist eine spezielle und kostenintensive Auswerteelektronik notwendig.

Ein akustisches Verfahren zur Rissdetektion ist die Schallemissionsmessung. Bei einer Rissbildung wird Energie frei, welche als Schallemission über hochfrequente Sensoren registriert werden kann. Durch eine geeignete Anordnung mehrerer Sensoren kann der Ort der Emissionsquelle, also der Riss, lokalisiert werden. Es lassen sich zudem Rissbildungen registrieren, die nicht an der Oberfläche des Betonbauteils liegen. Das Verfahren erfordert die Verwendung von Hochfrequenzmesstechnik und teuren Sensoren. Ferner verursacht Rissbildung im Beton eine geringe Schallemission und Nebengeräusche können dieses Signal leicht überdecken. Außer einem Schallimpuls zum Zeitpunkt der Rissbildung gibt es keine weiteren Hinweise auf die Rissentstehung oder -änderung.

Ein weiteres akustisches Verfahren zur Rissdetektion basiert auf Ultraschallmessungen. Über einen speziellen Prüfkopf bzw. einen Sender wird ein Ultraschallsignal in das Betonbauteil gegeben, welches an Rissen bzw. inneren Oberflächen reflektiert wird. Aus der Reflexion kann auf das Vorhandensein und die Lage eines Risses geschlussfolgert werden. Das Verfahren erfordert die Verwendung von Hochfrequenzmesstechnik und teuren Sensoren und vorhandene Risse und Heterogenitäten im Betonbauteil können die Messung beeinträchtigen.

Der Erfindung liegt die Aufgabe zu Grunde, eine verbesserte, zuverlässige und kosteneffektive Erkennung von Rissen in Betonbauteilen zu ermöglichen.

Erfindungsgemäß wird vorgeschlagen, dass das Messelement in einer vor dem Verbinden des Messelementes in das Betonbauteil eingebrachten Nut in einer verbundfesten Verbindung mit dem Betonbauteil angeordnet wird. Eine verbundfeste Verbindung ist insbesondere eine zug-, haft- und/oder schubfeste Verbindung. Die Erfindung nutzt den Vorteil, dass die Bildung eines Risses in dem Betonbauteil im Bereich der Nut aufgrund der verbundfesten Verbindung mit dem Messelement mit der Bildung eines Risses im Messelement einhergeht, wobei in der Nut ein direkter Kontakt zwischen dem Messelement und den Betonbauteil hergestellt wird, ohne dass ein weiteres Material als Verbindungsmittel benötigt wird. Wenn das Messelement reißt, ändert sich der elektrische Widerstand des Messelementes. Somit kann von dem elektrischen Widerstand des Messelementes, welcher zwischen den wenigstens zwei Messkontakten gemessen werden kann, auf den Rissbildungszustand des Betonbauteils geschlossen werden. Dabei wird das Messelement bevorzugt direkt mit dem Betonbauteil, d.h. ohne eine Zwischenschicht, verbunden.

Für die Bereitstellung der Detektionsanordnung ist kein spezieller Sensor nötig, da das Messelement den Sensor bildet. Zur Detektion muss lediglich der elektrische Widerstand des Messelementes bestimmt werden. Die Erfindung erlaubt die Bereitstellung einer Detektionsanordnung für eine kontinuierliche, objektive, wenig aufwendige, zur Rissbildung zeitnahe und automatische Erkennung von einem Riss in dem Betonbauteil auf Grundlage einer elektrischen Widerstandsmessung. Das Anordnen und vorteilhaft das gleichzeitige Verbinden des Messelementes mit dem Betonbauteil innerhalb der Nut erfolgt beispielsweise durch Einpressen des Messelementes. Das Messelement kann minimalinvasiv in der Nut untergebracht und somit mit der Nut verbunden werden, wodurch ein sehr guter verbundfester Verbund zwischen dem Messelement und dem Betonbauteil gewährleistet wird. Unebenheiten und/oder mangelnde Haftung auf einer Oberfläche des Betonbauteils stellen keine Probleme dar, da ein Verbund des Messelementes und des Betonbauteils an den Flanken der Nut hergestellt wird.

Nach dem Verbinden liegt vorteilhaft zwischen dem Messelement und dem Betonbauteil eine formschlüssige und feste Verbindung vor. Die verbundfeste und insbesondere formschlüssige Verbindung zwischen dem Messelement und dem Betonbauteil ist eine Voraussetzung für eine sichere Detektion eines Risses im Betonbauteil.

Die bereitgestellte Detektionsanordnung kann beispielsweise der Bauwerksüberwachung und/oder im Bereich der Qualitätssicherung von Betonbauteilen, beispielsweise von Spannbetonbauteilen, dienen. Die Verwendung des Verfahrens kann auch sehr vorteilhaft bei der Bauwerksprüfung nach DIN 1076 sein, da ein mit derartigen Messelementen versehenes Bauwerk nicht aufwendig nach Rissen abgesucht werden muss, sondern der Risszustand beispielsweise durch Verwendung eines entsprechenden Auslesegeräts einfach ausgelesen werden kann.

Vorteilhaft wird die Nut vor dem Verbinden des Messelementes in das Betonbauteil eingebracht, um eine flexible und an die Gegebenheiten des Betonbauteils anpasste Anordnung der Nut und somit des Messelementes zu ermöglichen. Die Länge und Richtung der Nut kann beim Einbringen der Nut an das Betonbauteil angepasst werden. Dadurch lässt sich eine weiträumige und zielgerichtete Überwachung an einer Betonoberfläche und/oder am Betonbauteil herbeiführen. Durch Länge, Tiefe und Richtung der Nut, welche auch geknickt, verzweigt und/oder gekrümmt verlaufen kann, kann der Überwachungsbereich exakt der jeweiligen Aufgabenstellung bzw. dem jeweiligen Betonbauteil angepasst werden. Das Einbringen der Nut kann beispielsweise durch Fräsen, Sägen, Schleifen und/oder ein anderes geeignetes spanendes oder materialabtragendes Verfahren erfolgen, wodurch insbesondere eine Nut mit einer besonders genauen Tiefe und Breite hergestellt werden kann.

Vorzugsweise weist die Nut und/oder das Messelement eine Tiefe T von 5 mm bis 10 mm und/oder eine Breite B von 3 mm bis 6 mm auf, um einfach und zuverlässig eine geeignete Nut und/oder ein geeignetes Messelement bereitstellen zu können. Vorteilhaft ist die Nut in ihrer Tiefe und/oder ihrer Breite so bemessen, dass das Messelement vollständig in der Nut versenkt werden kann, d.h. dass das Messelement im betriebsbereiten Zustand nicht erhaben ist und/oder von einer Oberfläche des Betonbauteils hervorragt. Vorteilhaft ist das Messelement so beschaffen, dass es in der Nut versenkbar bzw. vollständig einpressbar ist.

In einer bevorzugten Ausführungsform weist das Messelement während des Verbindens eine formbare pastöse Konsistenz auf und das Messelement erstarrt und/oder härtet nach dem Verbinden aus. Durch die formbare pastöse Konsistenz während des Verbindens kann das Messelement in die Nut beispielsweise eingepresst werden und/oder flexibel an die Form und Oberflächenbeschaffenheit der Nut beziehungsweise der Flanken der Nut angepasst werden. Somit ist das Messelement während der Verarbeitungszeit beim Verbinden geeignet formbar.

Vorteilhaft erstarrt und/oder härtet das Messelement in 1 Stunde, weiter vorteilhaft in mehr als 1 Stunde aus, um eine angemessene Verarbeitungszeit zu ermöglichen. Nach dem Aushärten hat das Messelement in der Nut einen verbundfesten Verbund mit dem Betonbauteil gebildet. Dabei sollte die Konsistenz so beschaffen sein, dass das Material sich auch bei Über-Kopf- Anwendung nicht aus der Nut herausbewegt, wodurch das Verfahren auf diese Weise bevorzugt auch lageunabhängig anwendbar ist.

Vorzugsweise weist das Messelement beim Verbinden eine Temperatur von 70 bis 90 Grad Celsius auf. Die Konsistenz des Messelementes kann durch die vorgeschlagene Temperatur verbessert werden. Wegen der durch die höhere Temperatur bedingten Beschleunigung der Aushärtung sollte das Erwärmen erst kurz vor dem Einbringen in die Nut erfolgen (beispielsweise durch Verwendung einer Einpresshilfe mit einem Heizelement an der Düse - ähnlich einer Heißklebepistole). Die beschleunigte Aushärtung ist aber auch von Vorteil, da die Verbindung zwischen dem Messelement und dem Betonbauteil dadurch schneller hergestellt wird, was z.B. besonders bei einer Über-Kopf-Anordnung des Messelementes von Vorteil ist.

Vorzugsweise werden während des Verbindens des Messelementes die wenigstens zwei Messkontakte in das Messelement und/oder in die Nut eingebracht, um die Detektionsanordnung zu einem späteren Zeitpunkt beispielsweise mit Messkabeln elektrisch mit den Messkontakten verbinden zu können. Die Einbringung der Messkontakte in das Messelement ist an jeder Stelle möglich, so dass dies vorteilhaft eine flexible Anordnung der Messkontakte erlaubt. Vor dem Verbinden des Messelementes und des Betonbauteils liegen das Messelement und die Messkontakte als vorteilhaft voneinander unabhängige Komponenten vor, die während des Verbindens in eine Wirkverbindung zur elektrischen Kontaktierung des Messelementes gebracht werden.

Vorteilhaft wird das Messelement aus einem Zweikomponentenwerkstoff mit einer ersten ein Trägermaterial bildenden Komponente und einer zweiten elektrisch leitfähigen Komponente hergestellt, um auf spezifische Anforderungen des Werkstoffs und die Verarbeitung eingehen zu können und gleichzeitig ein vergleichsweise kostengünstig verfügbares Messelement bereitstellen zu können. Das Messelement wird auf Grundlage eines Zweikomponentenwerkstoffes hergestellt, wobei eine der Komponenten, insbesondere das Trägermaterial selbst ein Zweikomponentenwerkstoff sein kann. Beispielsweise kann der Trägermaterial aus einem Harz, insbesondere einem Epoxidharz, ungesättigten Polyesterharz und/oder Methylmethacrylat und einem Härter bestehen. Das Trägermaterial kann in anderen Ausführungsformen durch ein Duroplast gebildet sein. Dabei ist das Trägermaterial speziell zur Bereitstellung der mechanischen Festigkeit des Messelementes ausgebildet, während die leitfähige Komponente oder speziell zur Verwirklichung der notwendigen elektrischen Leitfähigkeit ausgebildet ist. Die leitfähige Komponente bestimmt damit die messtechnischen Eigenschaften des Messelementes während das Trägermaterial zu der Verbindung mit dem Betonbauteil und zur Aufnahme und Übertragung der Spannungen des Betonbauteils dient, welche schließlich die Ursache für den zu detektierenden Riss bilden.

Dazu kann das Trägermaterial bevorzugt so beschaffen sein, dass das es bei einer Umgebungstemperatur von 20 Grad Celsius eine Viskosität von maximal 200 mPas aufweist. Dadurch kann das Trägermaterial mit einer ausreichenden Menge an elektrisch leitfähigem Material (Füllstoff) aufgefüllt werden, um die gewünschte Leitfähigkeit zu erreichen. Das Trägermaterial ist damit nahezu flüssig und wird durch den Füllstoff verfestigt, wobei das schließlich in das Betonbauteil einzubringende Messelement immer noch eine Viskosität aufweist, die ein einpressen des Messelementes in die Nut zulässt. Ferner kann das Messelement mit dem Trägermaterial dadurch bevorzugt so in die Nut des Betonbauteils eingedrückt werden, dass es die Nut möglichst frei von Hohlräumen, also vollständig, ausfüllt und sich der Oberfläche des Betonbauteils für eine formschlüssige Verbindung anpasst. Ferner kann der Werkstoff des Messelementes dadurch auch zur Schaffung einer stoffschlüssigen Verbindung zumindest geringfügig in die Oberfläche des Betonbauteils bzw. in die zur Oberfläche hin offenen Poren des Betonbauteils eindringen.

Die elektrisch leitfähige Komponente ist vorteilhaft ein Füllstoff, wobei der Füllstoff die elektrische Leitfähigkeit erzeugt beziehungsweise so einstellt, dass das Messelement im betriebsbereiten Zustand einen vorteilhaften elektrischen Widerstand aufweist. Ein höherer Anteil an Füllstoff ist im Allgemeinen mit einer höheren elektrischen Leitfähigkeit verbunden. Beispielsweise umfasst der Füllstoff elektrisch leitende Metallpartikel, Kohlenstoffpartikel, insbesondere Graphitstaub, Kohlenstoffnanoröhren und/oder Kohlenstofffasern. Im Verarbeitungszustand ist die Konsistenz des Messelements vom Anteil des Füllstoffs abhängig, wobei ein nicht zu hoher Anteil eine formbare pastöse Konsistenz bedingt, während ein zu hoher Anteil das Messelement ungleichmäßig, brüchig, porig, krümelig und/oder granular werden lässt. Die Menge des Füllstoffs ist vorzugsweise so zu bemessen, dass sich Luftblasen vor dem Einbringen des Messelements und vor dem Aushärten aus der Nut beziehungsweise aus dem Messelement ausklopfen oder anderweitig entfernen lassen und somit eine gleichmäßige Konsistenz erzielt werden kann.

Ferner kann mindestens ein zweites Messelement zu einer Vergleichsmessung in ein unbelastetes zweites Betonbauteil eingebracht werden. Das zweite Messelement liefert damit eine von der Belastung unabhängiges Signal, welches sich z.B. aufgrund von Temperaturänderungen ändert. Damit können durch einen Vergleich des Signals des Messelementes in dem belasteten Betonbauteil mit dem Signal des zweiten Messelementes in dem unbelasteten Betonbauteil Temperatureinflüsse identifiziert und durch eine signaltechnische Verarbeitung kompensiert werden. Dabei ist es wichtig, dass das zweite Betonbauteil denselben Umgebungsbedingungen ausgesetzt ist wie das Betonbauteil, in dem das erste Messelement angeordnet ist.

Ein Verfahren zur Detektion eines Risses in einem Betonbauteil umfasst folgende Schritte: Messung eines elektrischen Widerstandes eines Messelementes zwischen wenigstens zwei Messkontakten, wobei die Messkontakte mit dem Messelement elektrisch leitend verbunden sind. Erfindungsgemäß wird vorgeschlagen, dass das Messelement in einer in dem Betonbauteil vorgesehenen Nut in einer verbundfesten Verbindung mit dem Betonbauteil angeordnet ist, und zur Detektion eines Risses in dem Betonbauteil stellvertretend ein Riss in dem Messelement detektiert wird, um eine automatische Erkennung von Rissen im Betonbauteil auf Grundlage elektrischer Widerstandsmessung des Messelementes zu ermöglichen. Bei diesem Messverfahren muss lediglich der elektrische Widerstand des Messelementes ermittelt werden, was automatisch beispielsweise durch ein Dauermesssystem beziehungsweise eine Datenverarbeitungseinrichtung in einem Dauermesssystem geschehen kann. Das in der Nut verbundfest angeordnete Messelement erlaubt eine Messung in einem der Länge der Nut entsprechenden Bereich. Somit ist die Messung vorteilhaft nicht lokal auf wenige Quadratzentimeter beschränkt.

Eine Detektionsanordnung zur Detektion eines Risses in einem Betonbauteil umfasst ein Messelement und wenigstens zwei Messkontakte, wobei die Messkontakte elektrisch leitend mit dem Messelement verbunden sind. Erfindungsgemäß wird vorgeschlagen, dass das Messelement in einer in dem Betonbauteil vorgesehenen Nut in einer verbundfesten Verbindung mit dem Betonbauteil angeordnet ist, um eine automatische Erkennung von Rissen im Betonbauteil auf Grundlage elektrischer Widerstandsmessung zu ermöglichen. Mit der erfindungsgemäßen Detektionsanordnung ist es möglich, den Zeitpunkt der Entstehung und die Lage eines Risses an einer zuvor ungerissenen Betonoberfläche festzustellen und/oder die zeitliche Entwicklung des Risses zu ermöglichen. Dabei ist ein Riss im Betonbauteil stellvertretend durch eine Änderung des elektrischen Widerstands des Messelements messbar beziehungsweise detektierbar.

Vorteilhaft weist das Messelement im messbereiten Zustand einen elektrischen Widerstand von ca. 10 kQ/m oder weniger auf, um eine Änderung des elektrischen Widerstands bei der Rissbildung zuverlässig messen zu können. Ein langzeitbeständiger und vorzugsweise möglichst temperaturunabhängiger elektrischer Widerstand ist von Vorteil für eine zuverlässige Messung des elektrischen Widerstands des Messelements. Sofern ein geringfügiger Temperatureinfluss nicht vermieden werden kann, dieser aber trotzdem keinen Einfluss auf die Messung haben soll, ist es denkbar, einen spannungslosen Kompensationskörper aus einem identischen Werkstoff mit einem Messelement in der Nähe des zu messenden Betonbauteils vorzusehen, der identischen Umgebungseinflüssen ausgesetzt ist und als Referenzmessobjekt dient.

Vorzugsweise weist das Messelement im messbereiten Zustand eine Festigkeit und/oder ein Elastizitätsmodul auf, wobei die Festigkeit gleich oder größer, insbesondere nur etwas größer, der Festigkeit von Beton ist und/oder das Elastizitätsmodul gleich oder größer, insbesondere nur etwas größer, des Elastizitätsmoduls von Beton ist, um mit dem Betonbauteil eine vorteilhafte Verbindung eingehen zu können, wobei das Messelement aufgrund der Verbindung mit dem Betonbauteil den Verformungen und/oder Rissbildungen des Betonbauteils folgt. Der Begriff Festigkeit umfasst insbesondere die Zug-, die Druck- und die Scherfestigkeit. Eine Abweichung der Festigkeit und/oder des Elastizitätsmoduls des Messelements gegenüber Beton ist vorteilhaft nicht wesentlich, d.h. beispielsweise weniger als ± 50 %, um eine zuverlässige Wirksamkeit des Messverfahrens zu begünstigen. Somit ist eine Rissdetektion besonders vorteilhaft als Änderung des elektrischen Widerstands des Messelementes messbar.

In einer bevorzugten Ausführungsform weist das Messelement im messbereiten Zustand einen Temperaturausdehnungskoeffizienten auf, der dem von Beton entspricht, um Rissbildungen im Messelement durch Temperaturschwankungen und damit einhergehenden Ausdehnungen des Messelementes und des Betonbauteils zu vermeiden.

Gemäß einer weiteren bevorzugten Ausführungsform wird vorgeschlagen, dass das Messelement aus einem Zweikomponentenwerkstoff mit einer ersten ein Trägermaterial bildenden Komponente und einer zweiten elektrisch leitfähigen Komponente gebildet ist. Das Trägermaterial bildet den Grundstoff und kann gezielt zu einer verbundfesten Verbindung des Messelementes mit dem Grund und den Seitenflächen der Nut ausgebildet sein, während die zur Messung erforderliche Leitfähigkeit durch die zweite elektrisch leitfähige Komponente, die auch als Füllstoff bezeichnet werden kann, verwirklicht ist.

Vorteilhaft sind die Messkontakte wenigstens teilweise im Messelement eingebracht und/oder aufgebracht, beispielsweise aufgeklebt, um einen elektrischen Kontakt mit dem Messelement aufzuweisen und einen geringen elektrischen Widerstand zwischen den Messkontakten und dem Messelement bereitstellen zu können. Die Messkontakte sind vorteilhaft im betriebsbereiten Zustand an einer Oberfläche des Messelementes von außen zugänglich. Vorzugsweise weisen die Messkontakte Lötpunkte, Stecker und/oder Buchsen auf, um eine elektrische Verbindung zwischen dem Messelement und einer externen Einrichtung, beispielsweise einem Dauermesssystem, beispielsweise mittels eines Kabels herstellen zu können.

In einer vorteilhaften Ausführungsform ist die Detektionsanordnung über die Messkontakte mit einem Dauermesssystem verbindbar, um eine dauerhafte und/oder periodische Überwachung des elektrischen Widerstands des Messelementes über einen bestimmbaren Zeitraum zu ermöglichen.

Vorteilhaft umfasst die Detektionsanordnung mehr als zwei Messkontakte, um zwischen verschiedenen Bereichen des Betonbauteils, in denen das Messelement vorgesehen ist, unterscheiden zu können. Somit können mit einem Messelement mehrere Messbereiche bereitgestellt werden. Jeder Messbereich wird durch einen Abschnitt des Messelementes und ein Paar von Messkontakten, die den Abschnitt umgeben und/oder definieren, gebildet. Vorteilhaft kann die Detektionsanordnung auch mehrere Messelemente umfassen, welche jeweils zwei oder mehr Messkontakte aufweisen. In einer Ausführungsform mit mehreren Messelementen sind in dem Betonbauteil eine der Anzahl der Messelemente entsprechende Anzahl von Nuten vorgesehen. In jede der vorgesehenen Nuten kann ein Messelement eingebracht werden.

Ein erfindungsgemäßes Betonbauteil mit einer Detektionsanordnung weist eine Detektionsanordnung auf, um eine wenig aufwendige und automatische Erkennung von Rissen in dem Betonbauteil auf Grundlage einer elektrischen Widerstandsmessung zu ermöglichen.

Vorteilhaft weist das Betonbauteil eine Mehrzahl von Nuten auf, und in den Nuten sind ein oder mehrere Messelemente angeordnet, um das Betonbauteil an verschiedenen Orten beziehungsweise in verschiedenen Bereichen überwachen zu können. Die zu dem oder den Messelementen gehörigen Messkontakte können mit einer Messschaltung in einer elektrischen Wirkverbindung stehen. Vorteilhaft und besonders kosteneffektiv ist die Messschaltung so eingerichtet, die elektrische Widerstandsmessung des oder der Messelemente mit nur einem Messkanal oder zumindest mit einer gegenüber der Anzahl an Messbereichen deutlich verringerten Anzahl an Messkanälen durchzuführen.

Die Erfindung wird im Folgenden anhand bevorzugter Ausführungsformen unter Bezugnahme auf die beigefügte Figur erläutert. Dabei zeigt
- Fig. 1: ein Betonbauteil mit einer Detektionsanordnung und einem Riss;
- Fign. 2,3: je einen Querschnitt eines Betonbauteils mit einem erfindungsgemäßen Messelement;
- Fig. 4: ein Betonbauteil mit einer eine Mehrzahl von Messelementen umfassenden Detektionsanordnung; und
- Fig. 5: eine schematische Darstellung einer Detektionsanordnung zur Beobachtung eines Rissverlaufes.

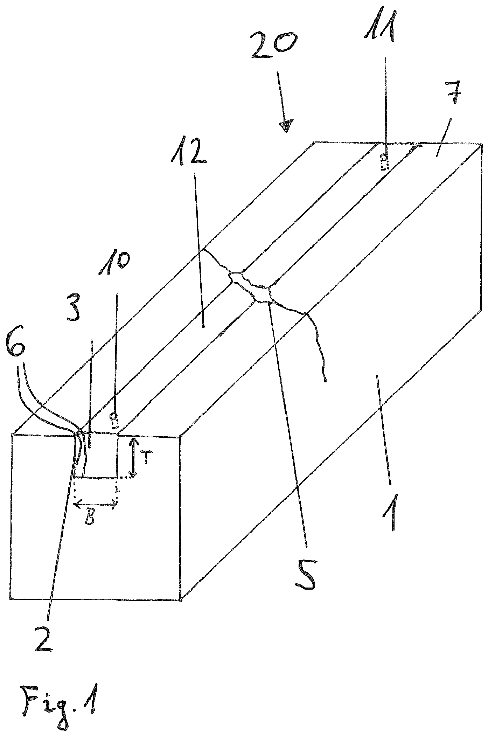

Figur 1 zeigt ein Betonbauteil 1 oder auch einen repräsentativen Ausschnitt eines Betonbauteils 1. Das Betonbauteil 1 weist eine Detektionsanordnung 20 in einem betriebsbereiten Zustand auf. Die Detektionsanordnung 20 umfasst ein Messelement 3 und zwei Messkontakte 10, 11, wobei die Messkontakte 10, 11 elektrisch leitend mit dem Messelement 3 verbunden sind. Das Betonbauteil 1 weist eine Nut 2 auf, und das Messelement 3 ist in der in dem Betonbauteil 1 vorgesehenen Nut 2 in einer verbundfesten Verbindung mit dem Betonbauteil 1 angeordnet.

Die Nut 2 weist zwei in das Betonbauteil 1 ragende Seitenflächen mit einer Tiefe T und eine senkrecht zu den Seitenflächen vorteilhaft parallel zu einer Oberfläche 7 des Betonbauteils 1 verlaufende Grundfläche mit einer Breite B auf. Vorzugsweise weist die Nut 2 und/oder das Messelement 3 eine Tiefe T von 5 mm bis 10 mm und/oder eine Breite B von 3 mm bis 6 mm auf. Die Nut 2 und/oder das Messelement 3 weist einen rechteckförmigen Querschnitt auf. In anderen Ausführungsformen kann der Querschnitt der Nut 2 und/oder des Messelements 3 jedoch auch einen drei- oder mehreckigen oder einen gekrümmten Querschnitt, beispielsweise einen halbkreisförmigen Querschnitt, aufweisen.

Zur Bereitstellung der Detektionsanordnung 20 wird die Nut 2 vorteilhaft in das Betonbauteil 1 gefräst oder auf eine andere geeignete Art in das Betonbauteil 1 eingebracht. In einem vorteilhaften Verfahrensschritt zur Bereitstellung der Detektionsanordnung 20 wird die Nut 2 nach dem Einbringen so präpariert, dass die Nut staubfrei, fettfrei und trocken ist, um ein besonders effektives Verbinden des Messelements 3 mit dem Betonbauteil 1 zu ermöglichen.

Das Messelement 3 wird beispielsweise als ein Zweikomponentenwerkstoff mit einer formbaren Konsistenz in die Nut 2 eingepresst. Der Zweikomponentenwerkstoff umfasst eine erste ein Trägermaterial bildende Komponente und eine zweite elektrisch leitfähige Komponente, insbesondere einen Füllstoff. Das Trägermaterial ist dabei bevorzugt eine aushärtbare Masse, in welche die zweite elektrisch leitfähige Komponente z.B. in Form von Partikeln eingelagert ist. Eine solche leitfähige Komponente ist z.B. Graphitstaub oder ein Gemisch aus Graphitstaub und Kohlenstoffnanoröhren. Der Graphitstaub kann dabei in unterschiedlichen Anteilen bzw. Konzentrationen in dem Trägermaterial vorgesehen sein, soweit die elektrische Leitfähigkeit dies erfordert und die gewünschten mechanischen Eigenschaften des Zweikomponentenwerkstoffs erreicht werden. Als Trägermaterial sind z.B. aushärtbare Kunststoffe aus einem Grundstoff und einem Härter denkbar, welche ebenfalls als Zweikomponentenwerkstoffe bezeichnet werden. In diesem Fall ist das Messelement 3 selbst ein Zweikomponentenwerkstoff, der seinerseits aus einer Komponente in Form eines Zweikomponentenwerkstoffs (dem Trägermaterial) und dem Füllstoff gebildet ist. Dabei können die Eigenschaften des Messelementes 3 durch die gezielte Auslegung der Eigenschaften des Trägermaterials und des Füllstoffes so ausgelegt werden, dass sie den Eigenschaften des Betons einzeln oder in Kombination ähnlich oder sogar identisch sind. Soweit Nuten 2 mit einer Standardgröße verwendet werden, können die Messelemente 3 auch vorgefertigt werden und dann nach dem Einsetzen gesondert mit der Oberfläche der Nut 2 verbunden werden. Dazu kann die Oberfläche des Messelementes 3 z. B. mit einem Kleber versehen oder auch leicht angeschmolzen werden, wobei das Messelement 3 dann nach dem Einsetzen durch Eindringen des aufgeschmolzenen Kunststoffes oder des Klebstoffes in die Oberfläche der Nut 2 eine stoffschlüssige Verbindung mit dem Betonbauteil 1 bildet. Eine solche stoffschlüssige, verbundfeste Verbindung kann aber auch durch das Einbringen des Messelementes 3 im pastösen Zustand und ein Eindiffundieren des Zweikomponentenwerkstoffs bzw. des Trägermaterials in die Oberfläche der Nut 2 verwirklicht werden. Sofern ein Eindiffundieren nicht möglich ist, kann es aber auch ausreichend sein, wenn das Messelement 3 allein durch einen Formschluss mit der Nutoberfläche verbunden ist.

In das formbare Messelement 3 beziehungsweise in die mit dem formbaren Zweikomponentenwerkstoff verfüllte Nut 2 werden, je nachdem, wo ein Riss 5 lokalisiert werden soll, die Messkontakte 10, 11 eingebracht. Die Verwendung eines Zweikomponentenwerkstoffes begünstigt, dass das Messelement 3 in direkten Kontakt mit dem Betonbauteil 1 gebracht wird. Das Messelement 3 kann direkt in die Nut 2 des Betonbauteils 1 eingebracht beziehungsweise eingepresst werden. Vorzugsweise werden die Messkontakte 10,11 in das Messelement 3 eingebracht, solange das Messelement 3 noch formbar ist und so ein sicherer Kontakt beziehungsweise eine sichere elektrische Verbindung zwischen den Messkontakte 10,11 und dem Messelement 3 hergestellt werden kann.

Es ist auch denkbar, dass die Messkontakte 10, 11 nach dem Aushärten in das Messelement 3 eingebracht werden. Dies kann aus technologischen Gründen vorteilhaft sein und durch Bohren in das Messelement 3 und Einkleben der Messkontakte 10, 11 in das Messelement 3 mit einem gut elektrisch leitenden Kleber, beispielsweise einem Silber enthaltenden Silberkleber, zu einer zuverlässigen und elektrisch leitenden Verbindung zwischen den Messkontakten 10, 11 und dem Messelement 3 führen. Auch lediglich das Aufkleben der Messkontakte 10, 11 auf das Messelement 3 beispielsweise mit einem Silberkleber ist denkbar. Für das Ein- oder Aufkleben der Messkontakte 10, 11 kann aber auch ein Material verwendet werden, welches dem Material des Messelementes 3 gleicht oder leicht modifiziert ist, indem dieses z.B. hinsichtlich des Anteils und der Zusammensetzung des Graphit-Füllstoffs verändert ist.

Das Messelement 3 härtet nach dem Einpressen in die Nut 2 und/oder nach dem Einbringen der Messkontakte 10, 11 vorteilhaft aus und geht mit Flanken 6 der Nut 2, die die Nut 2 begrenzen bzw. bewanden, eine verbundfeste und/oder vorteilhaft dauerhafte und feste Verbindung ein. Vorteilhaft und wesentlich ist, dass die Kraft die notwendig ist, um die verbundfeste Verbindung des Messelements 3 mit den Flanken der Nut 2 aufzuheben, größer ist als die Kraft, die zur Bildung des Risses 5 beziehungsweise zum Reißen des Messelements 3 führt. Durch den Verbund des Messelementes 3 und des Betonbauteils 1 an den Flanken 6 der Nut 2 ist der Verbund zwischen dem Messelement 3 und dem Betonbauteil 1 unabhängig von der Beschaffenheit der Oberfläche 7 des Betonbauteils 1.

Im ausgehärteten Zustand ist das Messelement 3 vorteilhaft starr und/oder spröde, um zu gewährleisten, dass sich ein Riss in dem Betonbauteil 1 in einem Riss 5 in dem mit dem Betonbauteil 1 verbundfest verbundenen Messelement 3 niederschlägt. Vorteilhaft ist das Messelement 3 schrumpfarm, frostbeständig, temperaturbeständig bis 100 °C und alterungsbeständig, um eine dauerhafte Beobachtung des Betonbauteils 1 zu ermöglichen und um eine Bildung des Risses 5 des Messelements 3 ohne vorangegangene Rissbildung des Betonbauteils 1 auszuschließen.

Der Bereich zwischen zwei Messkontakten 10, 11 markiert einen Messbereich bzw. eine Überwachungsstelle 12. Die Bildung eines Risses 5 führt zu einer Rissbildung des Messelements 3, was mit einem deutlichen Anstieg des elektrischen Widerstands des Messelementes 3 innerhalb der jeweiligen Überwachungsstelle 12 verbunden ist. Eine abrupte Erhöhung des elektrischen Widerstands kann als Rissbildung interpretiert werden. Durch die Kenntnis der Lage der jeweiligen Überwachungsstelle 12 kann die Lage des Risses 5 bestimmt werden. Die Risskontrolle beruht auf der Messung des elektrischen Widerstands im Messelement an jeder definierten Überwachungsstelle 12.

Die Messkontakte 10, 11 sind jeweils zur elektrischen Kontaktierung mit beispielsweise einem nicht dargestellten Kabel verbunden. Beispielsweise können die Messkontakte 10, 11, wie in Figur 1 durch gepunktete Linien angedeutet, Buchsen aufweisen, wobei sich die Buchsen in das Innere des Messelements 3 erstrecken und zur Kontaktierung von einem Stecker eingerichtet sind. Ist die Detektionsanordnung 20 an den Messkontakten 10, 11 elektrisch mit beispielsweise einem externen Dauermesssystem verbunden, kann die Lage eines Risses 5 am Betonbauteil 1 ermittelt werden, ohne dass eine Person das Bauteil besichtigen muss.

Aus der Änderung des elektrischen Widerstands des Messelementes 3 kann die zeitnahe Information gewonnen werden, ob überhaupt und ggf. wann ein Riss 5 an einer zuvor ungerissenen Betonoberfläche 7 entstanden ist und/oder wo ungefähr sich der Riss 5 befindet. Die Detektionsanordnung 20 dient somit der zeitlichen und örtlichen Rissdetektion, als Risssensor und/oder zur Risserfassung.

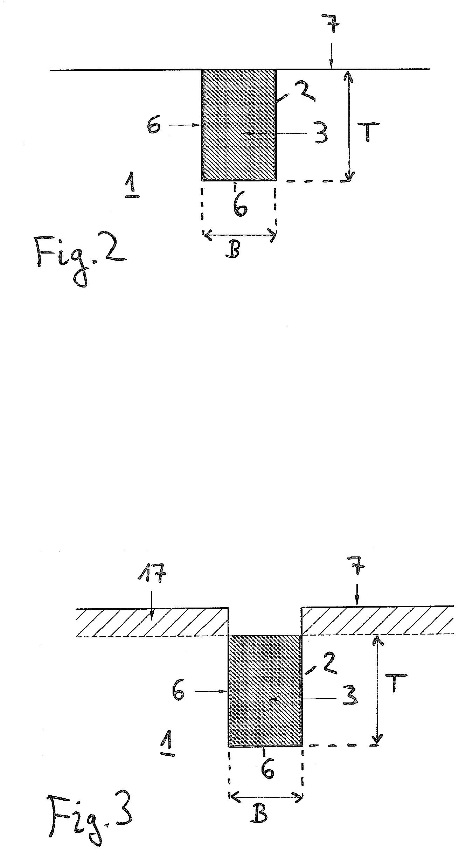

Figuren 2 und 3 zeigen je einen Querschnitt eines Betonbauteils 1 mit einem erfindungsgemäßen Messelement 3. Die Nut 2 ist so beschaffen, dass die Zugfestigkeit des Messelements 3 vorteilhaft deutlich eher erreicht wird als die Verbundfestigkeit zwischen Messelement 3 und dem Betonbauteil 1. Beispielsweise kann dies erreicht werden, indem die Verbundfläche, also die Kontaktfläche zwischen dem Messelement 3 und dem Betonbauteil 1 bzw. die Fläche der Flanken 6 der Nut 2, vergleichsweise groß gegenüber der Querschnittsfläche des Messelements 3 ist.

Wie in Figur 3 dargestellt, kann die Tiefe T der Nut 2 variieren, je nach Rauigkeit der Oberfläche 7 in einem Rauigkeitsbereich 17 des Betonbauteils 1. Die Nut 2 ist vorteilhaft so tief, dass an der tiefsten Stelle der Betonoberfläche 7 noch eine ausreichende Höhe bzw. Dicke des Messelements 3 und damit eine ausreichende Kontaktfläche zwischen dem Messelement 3 und dem Betonbauteil 1 gegeben ist.

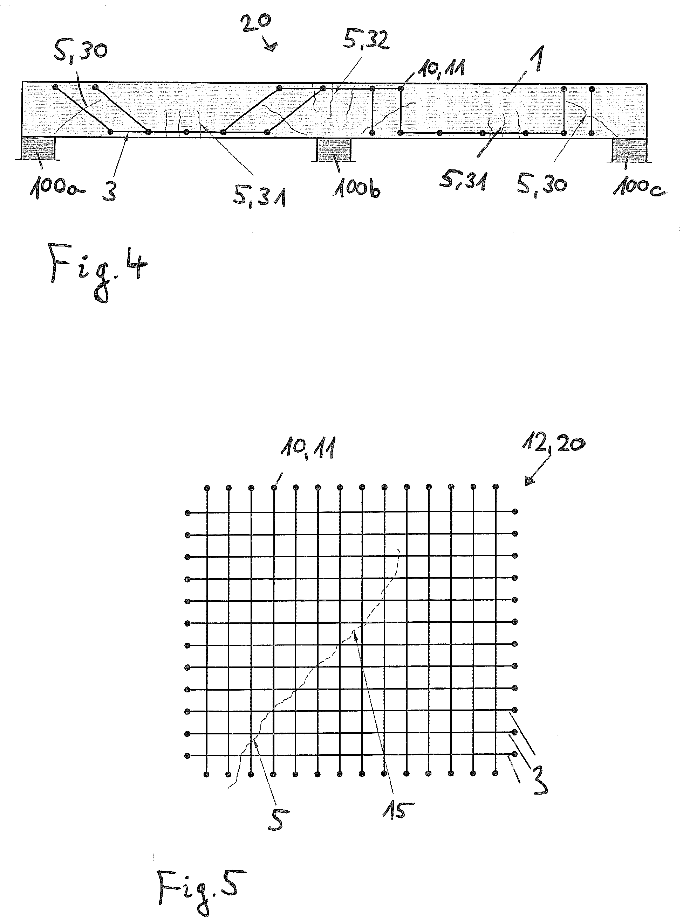

Figur 4 zeigt ein Betonbauteil 1 mit einer eine Mehrzahl von Messelementen 3 umfassenden Detektionsanordnung 20. Das Betonbauteil 1 ist auf einem Fundament und/oder von einer Mehrzahl von Lagern und/oder Trägern 100a, 100b, 100c gehalten. Entsprechend der Lagerung des Betonbauteils 1 auf den Trägern 100a, 100b, 100c bilden sich für die Anordnung des Betonbauteils 1 durch die damit einhergehende Belastung und Dehnung charakteristische Risse 5.

Die Nuten 2 und Messelemente 3 können beliebig am, beziehungsweise im Betonbauteil 1 ausgerichtet sein. Vorzugsweise erfolgt die Ausrichtung der Nuten 2 und damit der Messelemente 3 in Richtung der erwarteten Hauptzugdehnung des Betonbauteils 1 und damit senkrecht zur erwarteten Rissbildung infolge der zu erwartenden betriebsbedingten Belastung. Eine übermäßig genaue Ausrichtung der Messelemente 3 ist jedoch nicht erforderlich, da ein Messelement 3 auch vollständig durchtrennt wird und seinen elektrischen Widerstand ändert, wenn es von einem schräg zu den Seiten des Messelementes 3 verlaufenden Riss 5 durchkreuzt wird.

In dem gezeigten Beispiel für die Ausrichtung von Messelementen 3 für eine standardmäßige biegebeanspruchte Zweifeldkonstruktion wie z. B. einer Brücke sind verschiedene Risse 5 zu erkennen. Eine horizontale Ausrichtung eines Messelements 3 im Betonbauteil 1 ist vorteilhaft für die Detektion eines Biegerisses 5,32 an einem Zwischenauflager 100b, welcher typischerweise vertikal verläuft. Eine horizontale Ausrichtung eines Messelements 3 im Betonbauteil 1 ist ferner vorteilhaft für die Detektion eines Biegerisses 5,31 in einem Feldbereich der Unterseite des Betonbauteils 1 also an der Unterseite der Brücke welcher typischerweise vertikal verläuft. Eine schräge, insbesondere eine einen Winkel von 45 ° zu der Horizontalen einschließenden, Ausrichtung eines Messelements 3 im Betonbauteil 1 ist vorteilhaft für die Detektion eines Schubrisses 5,30 nahe den Auflagern 100a, 100c der Brücke, welcher typischerweise ebenfalls schräg verläuft.

Nach Bedarf kann die Anzahl der Messelemente 3 und/oder Messpunkte 10, 11 beliebig angepasst werden, um einen auftretenden Riss 5 genau zu lokalisieren.

Figur 5 zeigt eine schematische Darstellung einer Detektionsanordnung 20 zur Beobachtung eines fortlaufenden Risses 5 oder auch der Rissausbreitung. Die Detektionsanordnung 20 ist auch für eine flächenhafte Rissdetektion geeignet, bei welcher der Rissfortschritt (Länge und Richtung) rasterförmig in einem flächigen Überwachungsbereich beziehungsweise einer flächigen Überwachungsstelle 12 erfasst werden kann. Die Oberfläche des Betonbauteils 1 muss dazu mit einer rasterförmigen Anordnung von Nuten 2 und Messelementen 3 versehen werden. Die Messelemente 3 werden an den Endpunkten mit Messkontakten 10, 11 versehen. Zur Rissdetektion werden die elektrischen Widerstände zwischen allen Messpunkten 10, 11 untereinander ermittelt. Aus der Änderung des elektrischen Widerstands einzelner Bereiche und deren logischer Verknüpfung kann auf die Länge und Richtung eines evtl. Risses 5 geschlussfolgert werden. In Figur 5 ist die Propagation eines Risses 5 entlang einer durch die gestrichelte Linie angedeuteten künftigen möglichen Entwicklungsrichtung 15 erkennbar. Im Verlauf der Zeit wird sich der Riss 5 in diesem Beispiel entlang der möglichen Entwicklungsrichtung 15 ausbreiten und somit den elektrischen Widerstand einzelner Messelemente 3, durch welche die mögliche Entwicklungsrichtung 15 verläuft, ändern. Die zeitliche Änderung der elektrischen Widerstände der Messelemente 3 entlang der möglichen Entwicklungsrichtung 15 gibt Aufschluss über die zeitliche Entwicklung und Ausrichtung des Risses 5. Für die zeitliche Überwachung kann die Widerstandsmessung an den Messkontakten 10, 11 in geeigneten Zeitabständen, beispielsweise 1 bis 24 mal täglich oder auch öfter erfolgen.

## Patentansprüche

1. Verfahren zur Bereitstellung einer Detektionsanordnung (20) zur Detektion eines Risses (5) in einem Betonbauteil (1), umfassend folgende Schritte:
- Verbinden eines Messelementes (3) und des Betonbauteils (1),
- Bereitstellen wenigstens zweier Messkontakte (10, 11),
- wobei die Messkontakte (10, 11) mit dem Messelement (3) elektrisch leitend verbunden werden,
**dadurch gekennzeichnet, dass**
- das Messelement (3) in einer vor dem Verbinden des Messelementes (3) in das Betonbauteil (1) eingebrachten Nut (2) in einer verbundfesten Verbindung mit dem Betonbauteil (1) angeordnet wird.

2. Verfahren nach Anspruch 1, **dadurch gekennzeichnet, dass**
- die Nut (2) und/oder das Messelement (3) eine Tiefe T von 5 mm bis 10 mm und/oder eine Breite B von 3 mm bis 6 mm aufweist.

3. Verfahren nach einem der vorangehenden Ansprüche, **dadurch gekennzeichnet, dass**
- das Messelement (3) während des Verbindens eine formbare pastöse Konsistenz aufweist und das Messelement (3) nach dem Verbinden erstarrt und/oder aushärtet.

4. Verfahren nach Anspruch 3, **dadurch gekennzeichnet, dass**
- das Messelement (3) beim Verbinden eine Temperatur von 70-90 °C aufweist.

5. Verfahren nach einem der vorangehenden Ansprüche, **dadurch gekennzeichnet, dass**
- während des Verbindens des Messelementes (3) die wenigstens zwei Messkontakte (10, 11) in das Messelement (3) und/oder in die Nut (2) eingebracht werden.

6. Verfahren nach einem der vorangehenden Ansprüche, **dadurch gekennzeichnet, dass**
- das Messelement (3) aus einem Zweikomponentenwerkstoff mit einer ersten ein Trägermaterial bildenden Komponente und einer zweiten elektrisch leitfähigen Komponente hergestellt wird.

7. Verfahren nach Anspruch 6, **dadurch gekennzeichnet, dass**
- das Trägermaterial bei einer Temperatur von 20 Grad Celsius eine Viskosität von maximal 200 mPas aufweist.

8. Verfahren nach einem der Ansprüche 1 bis 7, **dadurch gekennzeichnet, dass**
- mindestens ein zweites Messelement (3) zu einer Vergleichsmessung in ein unbelastetes zweites Betonbauteil (1) eingebracht wird.

9. Detektionsanordnung (20) zur Detektion eines Risses (5) in einem Betonbauteil (1), umfassend
- ein Messelement (3), und
- wenigstens zwei Messkontakte (10, 11), wobei die Messkontakte (10, 11) elektrisch leitend mit dem Messelement (3) verbunden sind,
**dadurch gekennzeichnet, dass**
- das Messelement (3) in einer in dem Betonbauteil (1) vorgesehenen Nut (2) in einer verbundfesten Verbindung mit dem Betonbauteil (1) angeordnet ist.

10. Detektionsanordnung (20) nach Anspruch 9, **dadurch gekennzeichnet, dass**
- das Messelement (3) im messbereiten Zustand einen elektrischen Widerstand von weniger als 10 kQ/m aufweist.

11. Detektionsanordnung (20) nach Anspruch 9 oder 10, **dadurch gekennzeichnet, dass**
- das Messelement (3) im messbereiten Zustand eine Festigkeit aufweist, welche gleich oder größer der Festigkeit von Beton ist und/oder ein Elastizitätsmodul aufweist gleich oder größer als das Elastizitätsmoduls von Beton ist.

12. Detektionsanordnung (20) nach einem der Ansprüche 9 bis 11, **dadurch gekennzeichnet, dass**
- das Messelement (3) im messbereiten Zustand einen Temperaturausdehnungskoeffizienten aufweist, der dem von Beton entspricht.

13. Detektionsanordnung (20) nach einem der Ansprüche 9 bis 12, **dadurch gekennzeichnet, dass**
- das Messelement (3) aus einem Zweikomponentenwerkstoff mit einer ersten ein Trägermaterial bildenden Komponente und einer zweiten elektrisch leitfähigen Komponente gebildet ist.

14. Detektionsanordnung (20) nach Anspruch 9 bis 13, **dadurch gekennzeichnet, dass**
- die Messkontakte (10, 11) wenigstens teilweise im Messelement (3) eingebracht und/oder aufgebracht sind.

15. Detektionsanordnung (20) nach Anspruch 9 bis 14, **dadurch gekennzeichnet, dass**
- die Detektionsanordnung (20) mehr als zwei Messkontakte (10, 11) umfasst.
